Europäisches Patentamt

European Patent Office

Office européen des brevets

(11) Veröffentlichungsnummer : **0 084 065**
**B1**

(12) **EUROPÄISCHE PATENTSCHRIFT**

(45) Veröffentlichungstag der Patentschrift :
07.08.85

(21) Anmeldenummer : 82100199.7

(22) Anmeldetag : 13.01.82

(51) Int. Cl.⁴ : **A 47 J 37/08**

(54) Brotröster mit Brötchenröstaufsatz.

(43) Veröffentlichungstag der Anmeldung :
27.07.83 Patentblatt 83/30

(45) Bekanntmachung des Hinweises auf die Patenterteilung : 07.08.85 Patentblatt 85/32

(84) Benannte Vertragsstaaten :
**CH DE FR IT LI NL**

(56) Entgegenhaltungen :
DE-A- 2 728 081
DE-U- 7 719 579
GB-A- 1 245 067
GB-A- 2 075 336
US-A- 3 866 525

(73) Patentinhaber : **Arthur Eugster Elektro-Haushaltgeräte**
**Hofstrasse 28a**
**CH-8590 Romanshorn (CH)**

(72) Erfinder : **Eugster, Arthur**
**Hirschlade 10**
**CH-8590 Romanshorn (CH)**

(74) Vertreter : **Patentanwälte Grünecker, Dr. Kinkeldey,**
**Dr. Stockmair, Dr. Schumann, Jakob, Dr. Bezold,**
**Meister, Hilgers, Dr. Meyer-Plath**
**Maximilianstrasse 58**
**D-8000 München 22 (DE)**

**Beschreibung**

Die Erfindung betrifft einen Brotröster mit Brötchenaufbackaufsatz gemäß dem Oberbegriff des Patentanspruchs 1.

Aus der DE-B 27 28 081 ist ein Brotröster bekannt, bei dem ein Rost zum Auflegen von Brötchen an den beidseitigen, senkrecht verlaufenden Schutzgittern angebracht ist. Die Schutzgitter sind höhenverstellbar und werden an einer Schmalseite dadurch geführt, daß die äußersten Schutzgitterstäbe hinter vier an der einen Seitenwand ausgestanzten Lappen verlaufen, von denen jeweils zwei in einem vertikalen Abstand voneinander angeordnet sind. Die Schutzgitter sind elastisch gegeneinander vorgespannt, um durch Reibung in den Führungen eine stufenlose Höhenverstellung des Schutzgitters zu ermöglichen. Da die als Ring ausgeführte Bühne direkt mit dem Schutzgitter verbunden ist und das Schutzgitter auch an der Seitenwand anliegt, ergibt sich eine Wärmeableitung nach außen mit der Gefahr von Verbrennungen beim Einführen von Toastscheiben. Ferner kann durch Abnutzung der Lappen bzw. der darin geführten Gitterstäbe ein Spiel auftreten, das dazu führt, daß der Rost nicht mehr ausreichend sicher in seiner angehobenen Stellung gehalten wird.

Der Erfindung liegt die Aufgabe zugrunde, einen Brotröster anzugeben, bei dem der Brötchenaufbackaufsatz auf einfache Weise höhenverstellbar am Brotröster gehalten ist.

Die obige Aufgabe wird durch die kennzeichnenden Merkmale des Patentanspruchs 1 gelöst.

Durch das Verkanten des Brötchenrostes in der Führung ergibt sich aufgrund der Verklemmung eine eindeutige Feststellung der Lage. Ein Spiel in der Führung ist unschädlich, da die Verklemmung allein durch das vom Eigengewicht des Brötchenrostes verursachte Drehmoment erfolgt.

Dadurch, daß die Führung am Stützteil bzw. am Röster eine Nut-/Federführung aufweist, ergibt sich eine sehr einfache und dennoch stabile Ausführung.

Die Lagefixierung des Brötchenröstaufsatzes am Brotröster wird gemäß einer Weiterbildung der Erfindung dadurch verbessert, daß zumindest Teilbereiche der aneinder anliegenden Flächen der Führung mit Reibung erhöhenden Mitteln versehen sind.

Eine besonders gute Reibungswirkung ergibt sich gemäß einer bevorzugten Ausgestaltung des erfindungsgemäßen Brotrösters dadurch, daß die die Reibung erhöhenden Mittel aus einer Aufrauhung zumindest einer der beiden aneinander liegenden Flächen, aus einer waagrecht verlaufenden oder gitterförmigen Riffelung oder aus im Abstand voneinander angeordneten zugespitzten Stiften bestehen.

Die Höhenverstellung des Brötchenaufbackaufsatzes bezüglich des Brotrösters wird gemäß einer Weiterbildung der Erfindung dadurch erreicht, daß das Stützteil mit einer stirnseitigen Griffleiste versehen ist.

Ausführungsbeispiele des erfindungsgemäßen Brotrösters werden nun unter Bezugnahme auf die Zeichnungen beschrieben.

Es zeigen :

Figur 1 eine Ansicht auf die Breitseite eines Brotrösters gemäß einer ersten Ausführungsform der Erfindung,

Figur 2 eine ähnliche Ansicht wie Fig. 1 auf einen Brotröster einer zweiten Ausführungsform,

Figur 3 eine Seitenansicht eines Stützteiles wie es bei dem Brötchenaufbackaufsatz gemäß der Erfindung Verwendung finden kann,

Figur 4 einen Schnitt längs der Linie IV-IV des Stützteils nach Fig. 3,

Figur 5 eine Draufsicht des Brotrösters der Ausführungsform nach Fig. 1 mit einem Schnitt durch das Stützteil mit einer ersten Ausführungsform der bei der Erfindung verwendeten Führungsmittel, und

Figur 6 eine ähnliche Ansicht wie Fig. 5 für eine andere Ausführungsform der bei der Erfindung verwendeten Führungsmittel.

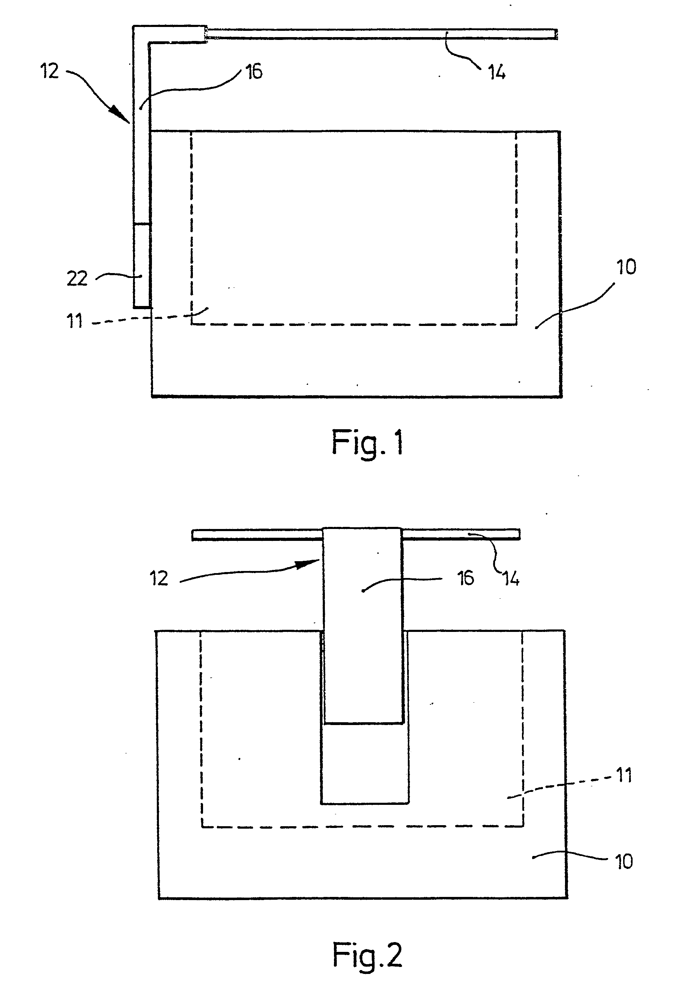

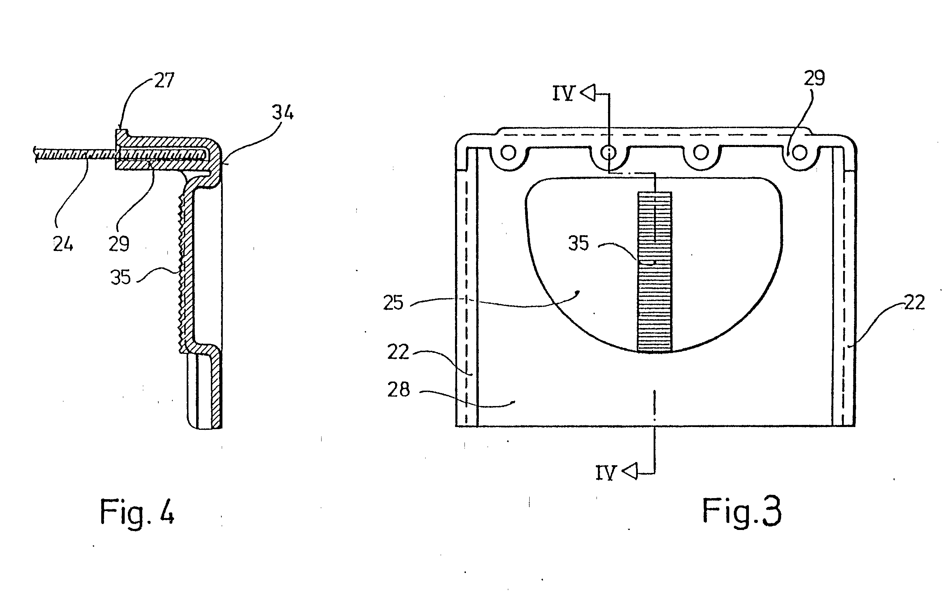

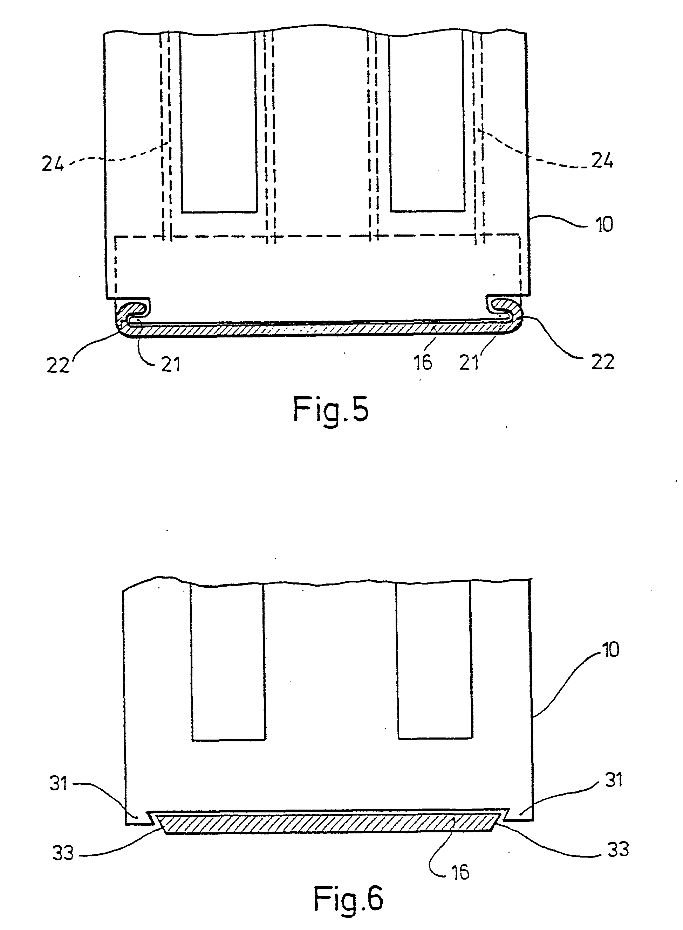

Fig. 1 zeigt schematisch einen Brotröster 10 mit angedeuteter Röstkammer 11. Auf einer der beiden Schmalseiten des Brotrösters 10 sind noch näher zu beschreibende Führungsmittel 22 für ein Stützteil 16 vorgesehen, das mit einem daran angesetzten Rost 14 einen Brötchenaufbackaufsatz 12 bildet. Das Stützteil 16 besteht vorzugsweise aus einer annähernd rechtwinkeligen Platte 28, deren Oberkante 29 abgewinkelt ist. Es sei darauf hingewiesen, daß die Form der Platte 28 an sich beliebig ist bis auf die parallele Führung der beien Seitenkanten 22. An der Oberkante 29 ist der Brötchenrost 14 angesetzt, der bei dem Ausführungsbeispiel die Form zweier sich über die Broteinlegeöffnungen erstreckender U-förmiger Drahtbügel 24 besitzt (vgl. Fig 4 und 5). Der Brötchenrost 14 kann auch eine passende andere Form, etwa nur einen Bügel mit entsprechenden Verstrebungen oder eine Gitterform aufweisen, die einerseits die Broteinlegeöffnungen möglichst wenig bedeckt, andererseits jedoch die Brötchen stabil hält. An die Stelle von Runddraht kann auch Flachdraht treten.

Wesentlich für die Erfindung ist u. a. die höhenverstellbare Anbringung des Stützteils 16 am Brotröster 10. Hierfür sind das Stützteil 16 und der Brotröster 10 mit zueinander komplementären, d. h. ineinander passenden Führungen für eine Höhenverschiebung versehen.

Fig. 5 zeigt als Beispiel eine Ausführungsform mit zwei zueinander parallel verlaufenden Nut/ Federführungen. Hierzu sind an der Schmalseite des Brotrösters 10 die senkrecht verlaufenden Kanten mit seitlichen Schlitzen versehen, so daß sich zueinander parallele Leisten 21 ergeben. Die Seitenkanten 22 der Platte 28 sind U-förmig umgebogen, so daß sie die Leisten 21 umgreifen. Die Passung ist so groß gewählt, daß ein leichtes Höhenverschieben des Stützteils 16 gegeben ist.

Fig. 6 zeigt eine andere Ausführungsform, bei der eine schwalbenschwanzförmige Führung 31, 33 verwendet wird. Von Bedeutung ist die einseitige Lagerung des Brötchenrostes 14 am Stützteil 16. Hierdurch wirkt aufgrund des Gewichtes des Brötchenrostes 14 und der gegebenenfalls darauf gelegten Brötchen ein Drehmoment auf den unteren Teil der Platte 28, das zu einem Verkanten der Platte 28 in den Führungen 21, 22 bzw. 31, 33 führt. Dieses Verkanten führt dazu, daß sich das Stützteil 16 in der Führung verklemmt und damit in seiner Lage eindeutig positioniert ist.

Bei bevorzugten Ausführungsformen der Erfindung ist zu einer noch besseren Fixierung des Brötchenaufbackaufsatzes 12 in seiner eingestellten Höhe eine weitere Maßnahme getroffen. Diese besteht im Prinzip darin, die nach Höheneinstellung des Brötchenaufbackaufsatzes 12 aneinander liegenden Flächen des Stützteiles 16 und des Brotrösters 10 mit die Reibung erhöhenden Mitteln zu versehen. Hierbei können entweder die eine oder die andere oder beide Flächen angerauht werden. Die Reibwirkung wird noch verstärkt, wenn eine gitterförmige Riffelung oder vorzugsweise eine linienförmige waagrechte Riffelung 35 (Fig. 3 und 4) angebracht wird. Diese Riffelung 35 braucht sich vorzugsweise nur über einen verhältnismäßig schmalen Streifen zu erstrecken, der in senkrechter Richtung in entsprechender Position auf zumindest einer, vorzugsweise jedoch beiden aneinander liegenden Flächen des Stützteils 16 und des Brotrösters 10 angebracht ist.

Eine andere Möglichkeit, die Reibwirkung zwischen den beiden genannten Flächen zu verstärken, besteht darin, zumindest eine der Flächen mit zugespitzten Stiften zu versehen, die in Abstand zueinander angeordnet sind.

Die zueinander komplementären Führungen 21, 22 bzw. 31, 33 müssen nicht unbedingt an der Schmalseite des Brotrösters 10 angebracht werden. Fig. 2 zeigt schematisch eine weitere Ausführungsform, bei der die genannten Führungen an der Breitseite angeordnet sind.

Das Aufsetzen des Brötchenaufbackaufsatzes wird gemäß der Erfindung durch eine Griffleiste 34 erleichtert, die an der Außenseite des Stützteils 16 angebracht ist. Diese horizontal verlaufende Griffleiste 34 wird einerseits durch die Oberkante 29 der Platte 28 und andererseits durch die Oberkante einer Griffmulde 25 begrenzt (vgl. Fig. 4 und 5). Eine am Rand der Oberkante 29 angebrachte Nase 27 gestaltet die Handhabung besonders griffig.

Das Stützteil 16 ist vorzugsweise ein einziges Kunststoff-Formteil, das wärmeisolierend gegenüber dem Brötchenrost 14 wirkt. Es ergibt sich somit eine äußerste einfache Ausbildung des erfindungsgemäßen Brötchenaufbackaufsatzes, der trotz der möglichen Höhenverstellbarkeit ausreichend stabil für die Abstützung der Brötchen ist.

## Patentansprüche

1. Brotröster mit einem oberhalb der Brotteinführungsöffnungen angeordneten Brötchenaufbackaufsatz (12), dessen Rost (14) parallel zur Oberseite des Brotrösters (10) verläuft, wobei der Rost (14) mit einem auf einer seiner Seiten angeordneten vertikalen Stützteil (16) an einer Seitenfläche des Brotrösters (10) höhenverstellbar geführt ist, dadurch gekennzeichnet, daß das Stützteil (16) in der Führung (21, 22, 31, 33) frei bewegbar ist, und aufgrund des vom Eigengewicht des Rostes (14) verursachten Drehmoments in der Führung verkantbar und damit durch Verklemmung in seiner Lage feststellbar ist.

2. Brotröster nach Anspruch 1, dadurch gekennzeichnet, daß die Führung am Stützteil (16) bzw. am Brotröster (10) eine Nut-/Federführung (21, 22 ; 31, 33) aufweist.

3. Brotröster nach Anspruch 1 oder 2, dadurch gekennzeichnet, daß zumindest Teilbereiche der aneinander liegenden Flächen der Führung mit die Reibung erhöhenden Mitteln (35) versehen sind.

4. Brotröster nach Anspruch 3, dadurch gekennzeichnet, daß die Mittel zur Erhöhung der Reibung aus einer Aufrauhung zumindest einer der beiden aneinander liegenden Flächen, aus einer waagrecht verlaufenden oder gitterförmigen Riffelung (35) oder aus in Abstand voneinander angeordneten zugespitzten Stiften bestehen.

5. Brotröster nach einem der vorhergehenden Ansprüche, dadurch gekennzeichnet, daß das Stützteil (16) mit einer stirnseitigen Griffleiste (34) versehen ist.

## Claims

1. Toaster with a bun-baking rack (12), of which the grid (14) extends parallel to the upper surface of the toaster (10), arranged above the bread-receiving opening, wherein the grid (14) is provided with a vertical support part (16) arranged on one of its sides guided to adjust its height in a side face of the toaster (10), characterised in that the support part (16) is freely movable in the guide (21, 22, 31, 33) and is tiltable in the guide on account of the turning moment caused by the specific weight of the grid (14) and is thereby fixed by clamping in its position.

2. Toaster according to claim 1, characterised in that the guide has a tongue/groove guide (21, 22 ; 31, 33) on the support part (16) or on the toaster (10).

3. Toaster according to claim 1 or 2, characterised in that at least the regions of the surface of the guide lying against one another are provided with friction increasing means (35).

4. Toaster according to claim 3, characterised in that the means for increasing the friction consist of a roughening on at least one of the two adjacently lying surfaces, of a horizontally extending or latticed ribbing (35) or of sharpened pegs arranged spaced from one another.

5. Toaster according to one of the preceding claims, characterised in that the support part (16) is provided with a front gripping ledge (34).

**Revendications**

1. Grille-pain muni d'un support de grillage pour petits pains (12) disposé au-dessus des ouvertures d'introduction de pain et dont la grille (14) est dirigée parallèlement au côté supérieur du grille-pain (10), la grille (14) étant guidée de façon réglable en hauteur, par un élément de soutien vertical (16) disposé sur l'un de ses côtés, le long d'une surface latérale du grille-pain (10), caractérisé par le fait que l'élément de soutien (16) peut se mouvoir dans le guide (21, 22, 31, 33) et qu'en vertu du couple causé par le poids propre de la grille (14), il peut être coincé dans le guide et peut ainsi être fixé dans sa position par blocage.

2. Grille-pain selon la revendication 1, caractérisé par le fait que le guide de l'élément de soutien (16) ou du grille-pain (10) présente un guide à rainure et languette (21, 22, 31, 33).

3. Grille-pain selon l'une des revendications 1 et 2, caractérisé par le fait qu'au moins des régions partielles des surfaces du guide qui sont appliquées l'une contre l'autre sont munies de moyens (35) augmentant le frottement.

4. Grille-pain selon la revendication 3, caractérisé en ce que les moyens servant à augmenter le frottement sont formés d'une rugosité d'au moins une des deux surfaces appliquées l'une contre l'autre, d'un striage (35) dirigé horizontalement ou en forme de grille, ou de broches taillées en pointe disposées avec espacement entre elles.

5. Grille-pain selon l'une des revendications précédentes, caractérisé par le fait que l'élément de soutien (16) est muni d'une baguette frontale de prise (34).

Fig. 1

Fig. 2

Fig. 4

Fig. 3

Fig.5

Fig.6